# FASCICULE DE BREVET EUROPEEN

(11) **EP 3 924 193 B1**
(45) Date de publication et mention de la délivrance du brevet: **20.03.2024**
(21) Numéro de dépôt: 19848968.4
(22) Date de dépôt: 20.12.2019
(51) Int. Cl.: B60B 7/00, B60B 7/02

(54) **ENJOLIVEUR PRESENTANT UN PROFIL AERODYNAMIQUE PERMETTANT UN BON REFROIDISSEMENT DU DISPOSITIF DE FREINAGE**
RADKAPPE MIT EINEM AERODYNAMISCHEN PROFIL ZUR ERMÖGLICHUNG EINER GUTEN KÜHLUNG DER BREMSVORRICHTUNG
HUBCAP HAVING AN AERODYNAMIC PROFILE ALLOWING GOOD COOLING OF THE BRAKING DEVICE

(30) Priorité: 12.02.2019 FR 1901363
(43) Date de publication de la demande: 22.12.2021
(73) Titulaire: Stellantis Auto SAS, 78300 Poissy (FR)
(72) Inventeur: PALPACUER, Eric, 75013 PARIS (FR)
(86) Numéro de dépôt international: PCT/FR2019/053252
(87) Numéro de publication internationale: WO 2020/165506

(56) Documents cités:
- WO-A1-2017/103359
- FR-A1- 3 003 200
- FR-A1- 3 011 769
- US-A- 2 857 023
- US-A1- 2016 361 946
- US-A1- 2018 065 407

## Description

La présente invention concerne un enjoliveur destiné à recouvrir le voile d'une roue d'un véhicule, en particulier d'un véhicule automobile, qui présente un profil aérodynamique adapté pour améliorer l'efficacité aérodynamique du véhicule.

La présente invention concerne plus particulièrement un tel enjoliveur qui comporte une première partie centrale qui forme un moyeu, une seconde partie positionnée en périphérie dudit moyeu, qui forme une bordure et des premières pales qui relient le moyeu à la bordure en s'étendant suivant une direction radiale de l'enjoliveur.

La performance aérodynamique d'un véhicule peut être améliorée via l'optimisation de la face de style de chaque roue. La performance aérodynamique de la roue d'un véhicule demande une face de style fermée au maximum alors que la thermique des freins demande des ouvertures importantes de cette face de style. Cette exigence est d'autant plus importante une fois le véhicule arrêté après une forte sollicitation du dispositif de freinage. Le document FR-A1-3011769 divulgue un enjoliveur destiné à recouvrir le voile d'une roue d'un véhicule, en particulier d'un véhicule automobile, qui présente un profil aérodynamique adapté pour améliorer l'efficacité aérodynamique du véhicule. L'enjoliveur comporte une première partie centrale qui forme un moyeu, une seconde partie positionnée en périphérie dudit moyeu, qui forme une bordure et des pales qui relient le moyeu à la bordure, en s'étendant suivant une direction radiale de l'enjoliveur. Le voile de la roue comporte une série d'ouvertures qui sont destinées à permettre le passage d'un flux d'air pour refroidir le dispositif de freinage. Lors du roulage du véhicule, les pales contribuent à ce refroidissement, mais à l'arrêt du véhicule après une forte sollicitation du dispositif de freinage, les pales, lorsqu'elles sont positionnées devant les ouvertures du voile de la jante, limitent le refroidissement du dispositif de freinage. Le document US 2018/065407 A1 décrit un autre enjoliveur destiné à recouvrir le voile d'une roue de véhicule et présentant des pales mobiles.

L'enjoliveur selon l'invention permet de remédier à cet inconvénient. Il comporte en effet selon une première caractéristique un enjoliveur destiné à recouvrir le voile d'une roue d'un véhicule, en particulier d'un véhicule automobile, qui comporte une première partie centrale qui forme un moyeu, une seconde partie positionnée en périphérie dudit moyeu, qui forme une bordure et des premières pales qui relient le moyeu à la bordure. Les premières pales s'étendent suivant une direction radiale de l'enjoliveur. Au moins entre deux premières pales est positionnée une seconde pale. La seconde pale s'étend partiellement entre le moyeu et la bordure, suivant une même direction radiale de l'enjoliveur, de manière à être uniquement reliée au moyeu ou à la bordure, laissant un espacement, respectivement, avec la bordure ou avec le moyeu. Cette espacement permet lors de l'arrêt du véhicule, à l'air chaud provenant du dispositif de freinage, de circuler de l'intérieur de la roue vers l'extérieure de la roue, au travers d'ouvertures formées dans le voile de la roue, ouvertures qui sont en correspondance avec lesdits espacements.

Selon un mode de réalisation préférentiel de l'invention, au moins une seconde pale est interposée entre chaque première pale.

Selon une première caractéristique de l'invention, la longueur en saillie du moyeu ou de la bordure de la seconde pale est compris entre 70% et 80 % de la distance séparant le moyeu de la bordure. Plus la seconde pale est longue et plus l'efficacité aérodynamique de l'enjoliveur est optimale lors du roulage du véhicule, mais moins le refroidissement lors de l'arrêt du véhicule sera importante. Un tel pourcentage présente un bon compromis, sachant que pour un véhicule de petite taille, sollicitant moins son dispositif de freinage, la seconde pale aura une longueur proche des 80% de la distance séparant le moyeu de la bordure et pour un véhicule de grande taille, sollicitant davantage son dispositif de freinage, la seconde pale aura une longueur proche des 70% de la distance séparant le moyeu de la bordure.

Selon une caractéristique de l'invention, les premières pales et les secondes pales présentent un profil dit aérodynamique adapté pour créer un flux d'air (FXᵣₒᵤₗₐₙₜ) entre le moyeu et la bordure. Le profil aérodynamique des premières pales et des secondes pales présente un profil de type « CLARK Y ». « CLARK Y » est le nom d'un profil aérodynamique particulier, largement utilisé dans les conceptions des profils des ailes des d'aéronefs.

Selon le mode de réalisation préférentiel, l'enjoliveur comporte huit premières pales et huit secondes pales, chaque seconde pale étant interposée entre deux premières pales. Les secondes pales s'étendent du moyeu faisant que l'espacement est formé entre l'extrémité libre de chaque seconde pale et la bordure.

La présente invention concerne aussi un ensemble formé par une roue d'un véhicule équipée d'un tel enjoliveur. L'enjoliveur est adapté pour recouvrir le voile de la roue. Le voile de la roue comporte une série d'ouvertures régulièrement réparties, les premières pales et les secondes pales de l'enjoliveur sont positionnées en vis-à-vis des ouvertures du voile de la roue. Chaque ouverture du voile de la roue est en correspondance d'une première pale ou d'une seconde pale. La roue et l'enjoliveur comportent des moyens de détrompage adaptés pour positionner chaque pale de l'enjoliveur devant une ouverture du voile de la roue.

La présente invention concerne enfin un véhicule, en particulier un véhicule automobile, qui comporte au moins un ensemble constitué d'une roue équipée d'un enjoliveur avec au moins une des caractéristiques précédentes.
[Fig. 1] représente une vue en perspective de l'ensemble constitué d'une roue et d'un enjoliveur selon l'invention, tel que destiné à être monté sur un véhicule.
[Fig. 2] représente une vue en coupe de la vue précédente, en perspective, de l'ensemble constitué de la roue et de l'enjoliveur selon l'invention.
[Fig. 3] représente une vue de côté, en coupe, de l'ensemble constitué de la roue et de l'enjoliveur selon l'invention.

Dans la description détaillée de l'invention est utilisé un référentiel lié au sens normal de circulation d'un véhicule. Le terme avant désigne un positionnement vers l'avant du véhicule et le terme arrière désigne un positionnement vers l'arrière du véhicule. L'axe longitudinal correspond à l'axe normal de circulation du véhicule et l'axe transversal à un axe perpendiculaire à l'axe longitudinal compris dans le plan de déplacement du véhicule.

En référence à ces dessins, le dispositif comporte une roue 1 et un enjoliveur 2 destiné à recouvrir un voile 11 de la roue 1. Un tel ensemble constitué de la roue 1 et de l'enjoliveur 2 est destiné à être monté sur un véhicule, en particulier sur un véhicule automobile. L'enjoliveur 2 comporte une première partie centrale 21 qui forme un moyeu, une seconde partie 22 positionnée en périphérie dudit moyeu 21, qui forme une bordure et des premières pales 23 qui relient le moyeu 21 à la bordure 22 en s'étendant suivant une direction sensiblement radiale de l'enjoliveur 2. Entre deux premières pales 23 est positionnée une seconde pale 24. La seconde pale 24 s'étend partiellement entre le moyeu 21 et la bordure 22, suivant une même direction sensiblement radiale de l'enjoliveur 2, de manière à être uniquement reliée au moyeu 21, laissant un espacement 25 avec la bordure 22. Les premières pales 23 et les secondes pales 24 présentent un même profil dit aérodynamique adapté pour créer un flux d'air entre le moyeu 21 et la bordure 22. Le profil aérodynamique est un profil de type « CLARK Y ». Le profil « CLARK Y » est un profil aérodynamique particulier tel que connu de l'état de la technique et très largement utilisé dans la construction aéronautique et le modélisme. L'enjoliveur 2 comporte huit premières pales 23 et huit secondes pales 24, chaque seconde pale 24 étant interposée entre deux premières pales 23. Le voile 11 de la roue 1 comporte une série d'ouvertures 12 régulièrement réparties. Chaque première pale 23 et chaque secondes pale 24 est positionnée en vis-à-vis d'une des ouvertures 12 du voile 11 de la roue 1. Il peut tout de même y avoir un décalage de +/- 10° entre le positionnement angulaire de chaque pale et le positionnement angulaire de chaque ouverture 12 du voile 11 de la roue 1. Pour garantir un tel positionnement, des moyens de détrompage (non représenté sur ces figures) sont positionnés sur la roue 1 et sur l'enjoliveur 2 pour s'assurer d'un bon montage de l'enjoliveur 2 sur la roue 1 en respectant le bon positionnement angulaire.

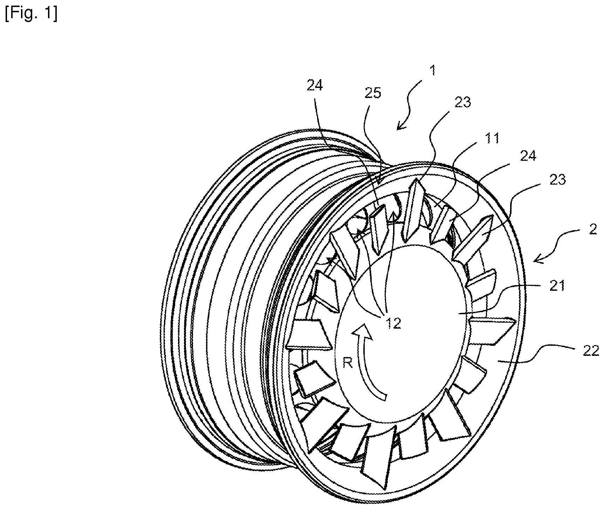

La figure 1 représente une vue en perspective de l'ensemble constitué de la roue 1 et de l'enjoliveur 2 tel que destiné à être monté sur le véhicule. Sur cette vue est plus particulièrement visible l'agencement des seize pales, constituées alternativement d'une première pale 23 et d'une seconde pale 24. Un tel enjoliveur 2 à effet « turbine » permet d'optimiser la traînée aérodynamique du véhicule en aspirant de l'air au travers de l'enjoliveur 2 et des ouvertures 12 du voile 11 de la roue 1 suivant un sens normal de rotation R correspondant au sens normal de circulation du véhicule, créant un écoulement plus propre et moins tourbillonnaire sur les flancs du véhicule.

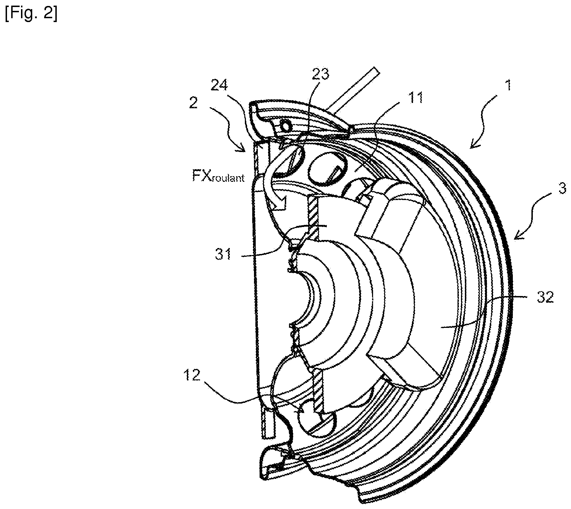

La figure 2 représente une vue en coupe de la vue précédente, en perspective, de l'ensemble constitué de la roue 1 et de l'enjoliveur 2. La roue 1 comporte un dispositif de freinage 3 constitué d'un disque de frein 31 et d'un étrier de frein 32. Les ouvertures 12 du voile 11 de la roue 1 servent à la circulation de l'air que ce soit en roulant où à l'arrêt du véhicule. Sur cette figure est représenté un flux d'air FXᵣₒᵤₗₐₙₜ correspondant au flux d'air qui se crée lors de la rotation de l'ensemble roue 1 et enjoliveur 2.

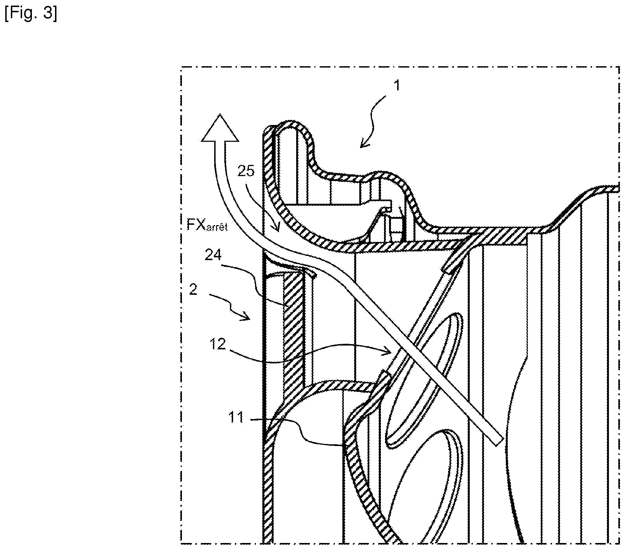

La figure 3 représente une vue de côté, en coupe, de l'ensemble constitué de la roue 1 et de l'enjoliveur 2. Sur cette vue le dispositif de freinage n'est pas visible. A l'arrêt du véhicule, les premières pales et les secondes pales 24, qui sont positionnées devant les ouvertures 12 du voile 11 de la roue 1, bouchent partiellement lesdites ouvertures 12 du voile 11, limitant le refroidissement du dispositif de freinage. Les espacements 25, qui se retrouvent positionnés dans la partie haute de l'ensemble roue 1 et enjoliveur 2 dans une position arrêtée du véhicule, forment des cheminées qui créent une circulation d'air chaud du dispositif de freinage vers l'extérieure de la roue 1. Un exemple de cette circulation d'air chaud est représenté par un flux d'air FX_{arrêt} traversant une des ouvertures 12 du voile 11 de la roue 1 qui est positionnée en haut de la roue dans cette position arrêtée de la roue 1 et un des espacement 25 correspondant à ladite ouverture 12. Dans l'exemple tel que représenté, la longueur en saillie de la seconde pale 24 est comprise entre 70% et 80 % de la distance séparant le moyeu 21 de la bordure 22. Plus l'espacement 25 est important et mieux le refroidissement du dispositif de freinage, lors de l'arrêt du véhicule, est important, mais cela impacte la performance aérodynamique lors du roulage du véhicule. La hauteur de l'espacement 25 est donc à affiner en fonction du poids et des performances de chaque véhicule.

## Revendications

1. Enjoliveur (2) destiné à recouvrir le voile (11) d'une roue (1) d'un véhicule, qui comporte une première partie centrale (21) qui forme un moyeu, une seconde partie (22) positionnée en périphérie dudit moyeu (21), qui forme une bordure et des premières pales (23) qui relient le moyeu (21) à la bordure (22) en s'étendant suivant une direction radiale de l'enjoliveur (2), au moins entre deux premières pales (23) est positionnée une seconde pale (24), ladite seconde pale (24) s'étendant partiellement entre le moyeu (21) et la bordure (22), suivant une même direction radiale de l'enjoliveur (2), en étant uniquement reliée au moyeu (21) ou à la bordure (22), laissant un espacement (25), respectivement, avec la bordure (22) ou avec le moyeu (21), les premières pales (23) et les secondes pales (24) présentant un profil dit aérodynamique adapté pour créer un flux d'air (FXᵣₒᵤₗₐₙₜ) entre le moyeu (21) et la bordure (22), le profil aérodynamique des premières pales (23) et des secondes pales (24) présentant un profil de type « CLARK Y ».

2. Enjoliveur (2) selon la revendication 1, **caractérisé en ce qu'**au moins une seconde pale (24) est interposée entre chaque première pale (23).

3. Enjoliveur (2) selon la revendication 1 ou 2, **caractérisé en ce que** la longueur en saillie du moyeu (21) ou de la bordure (22) de la seconde pale (24) est compris entre 70% et 80 % de la distance séparant le moyeu (21) de la bordure (22).

4. Enjoliveur (2) selon l'une quelconque des revendications précédentes, **caractérisé en ce que** l'enjoliveur (2) comporte huit premières pales (23) et huit secondes pales (24), chaque seconde pale (24) étant interposée entre deux premières pales (23) et **en ce que** les secondes pales (24) s'étendent du moyeu (21), ledit espacement (25) étant formé entre l'extrémité libre de chaque seconde pale (24) et la bordure (22).

5. Ensemble formé par une roue d'un véhicule (1) équipée d'un enjoliveur (2) selon l'une quelconque des revendications précédentes, ledit enjoliveur (2) étant adapté pour recouvrir le voile (11) de la roue (1), le voile (11) de la roue (1) comportant une série d'ouvertures (12) régulièrement réparties, les premières pales (23) et les secondes pales (24) étant positionnées en vis-à-vis desdites ouvertures (12) du voile (11) de la roue (1).

6. Ensemble selon la revendication 5, **caractérisé en ce que** chaque ouverture (12) du voile (11) de la roue (1) est en correspondance d'une première pale (23) ou d'une seconde pale (24).

7. Ensemble selon la revendication 5 ou 6, **caractérisé en ce que** la roue (1) et l'enjoliveur (2) comportent des moyens de détrompage adaptés pour positionner chaque pale (23, 24) de l'enjoliveur (2) devant une ouverture (12) du voile (11) de la roue (1).

8. Véhicule, en particulier véhicule automobile, **caractérisé en ce qu'**il comporte au moins un ensemble constitué d'une roue (1) équipée d'un enjoliveur (2) selon l'une quelconque des revendications 5 à 7.

## Patentansprüche

1. Zierkappe (2) zum Abdecken der Abdeckung (11) eines Fahrzeugrades (1) mit einem ersten, eine Nabe bildenden Mittelteil (21), einem am Umfang der Nabe (21) angeordneten zweiten, eine Kante bildenden Teil (22) und ersten, die Nabe (21) mit der Kante (22) in radialer Richtung der Zierkappe (2) verlaufenden Schaufeln (23), wobei zumindest zwischen zwei ersten Schaufeln (23) eine zweite Schaufel (24) angeordnet ist wobei das zweite Blatt (24) sich teilweise zwischen der Nabe (21) und der Kante (22) in derselben radialen Richtung der Zierkappe (2) erstreckt und nur mit der Nabe (21) oder der Kante (22) verbunden ist und einen Abstand (25) mit der Kante (22) bzw. der Nabe (21) belässt, wobei die ersten Blatt (23) und die zweiten Blatt (24) ein so genanntes aerodynamisches Profil aufweisen, das geeignet ist, einen Luftstrom (FXroulant) zwischen der Nabe zu erzeugen 21) und der Randstreifen (22), wobei das aerodynamische Profil der ersten Schaufeln (23) und der zweiten Schaufeln (24) ein Profil vom Typ "CLARK Y" aufweist.

2. Zierkappe (2) nach Anspruch 1, **dadurch gekennzeichnet, dass** mindestens eine zweite Schaufel (24) zwischen jeder ersten Schaufel (23) angeordnet ist.

3. Zierkappe (2) nach Anspruch 1 oder 2, **dadurch gekennzeichnet, dass** die vorspringende Länge der Nabe (21) oder des Randes (22) des zweiten Blattes (24) zwischen 70% und 80% des Abstands zwischen der Nabe (21) und dem Rand (22) beträgt.

4. Zierkappe (2) nach einem der vorhergehenden Ansprüche, **dadurch gekennzeichnet, dass** die Zierkappe (2) acht erste Schaufeln (23) und acht zweite Schaufeln (24) aufweist, wobei jede zweite Schaufel (24) zwischen zwei ersten Schaufeln (23) angeordnet ist, und dass sich die zweiten Schaufeln (24) von der Nabe (21) erstrecken, wobei der Abstand (25) zwischen dem freien Ende jeder zweiten Schaufel (24) und dem Rand (22) gebildet ist.

5. Baugruppe, die durch ein Rad eines Fahrzeugs (1) gebildet wird, das mit einer Zierkappe (2) nach einem der vorhergehenden Ansprüche ausgestattet ist, wobei die Zierkappe (2) dazu geeignet ist, die Bahn (11) des Rades (1) zu bedecken, wobei die Bahn (11) des Rades (1) eine Reihe von regelmäßig verteilten Öffnungen (12) aufweist, wobei die ersten Schaufeln (23) und die zweiten Schaufeln (24) gegenüber den Öffnungen (12) der Bahn (11) des Rades (1) angeordnet sind.

6. Anordnung nach Anspruch 5, **dadurch gekennzeichnet, dass** jede Öffnung (12) des Stegs (11) des Rades (1) einem ersten Blatt (23) oder einem zweiten Blatt (24) entspricht.

7. Anordnung nach Anspruch 5 oder 6, **dadurch gekennzeichnet, dass** das Rad (1) und die Zierkappe (2) Mittel zur Enttäuschung aufweisen, die geeignet sind, jedes Blatt (23, 24) der Zierkappe (2) vor einer Öffnung (12) des Vlieses (11) des Rades (1) zu positionieren.

8. Fahrzeug, insbesondere Kraftfahrzeug, **dadurch gekennzeichnet, dass** es mindestens eine Einheit umfasst, die aus einem Rad (1) besteht, das mit einer Zierkappe (2) nach einem der Ansprüche 5 bis 7 ausgestattet ist.

## Claims

1. Cover (2) for covering the web (11) of a wheel (1) of a vehicle, which comprises a first central part (21) which forms a hub, a second part (22) positioned at the periphery of said hub (21), which forms a border and first blades (23) which connect the hub (21) to the border (22) by extending in a radial direction of the cover (2), at least between two first blades (23) is positioned a second blade (24), said second blade (24) extending partially between the hub (21) and the edge (22), in the same radial direction of the trim (2), being connected solely to the hub (21) or to the edge (22), leaving a spacing (25), respectively, with the edge (22) or with the hub (21), the first blades (23) and the second blades (24) having a so-called aerodynamic profile adapted to create an air flow (FXroulant) between the hub (21) and the edge (22), the aerodynamic profile of the first blades (23) and of the second blades (24) having a "CLARK Y" type profile.

2. Trim (2) according to claim 1, **characterized in that** at least one second blade (24) is interposed between each first blade (23).

3. Trim (2) according to claim 1 or 2, **characterized in that** the projecting length of the hub (21) or of the edge (22) of the second blade (24) is between 70% and 80% of the distance separating the hub (21) from the edge (22).

4. Trim (2) according to any one of the preceding claims, **characterized in that** the trim (2) comprises eight first blades (23) and eight second blades (24), each second blade (24) being interposed between two first blades (23) and **in that** the second blades (24) extend from the hub (21), the said spacing (25) being formed between the free end of each second blade (24) and the edge (22).

5. Assembly formed by a wheel of a vehicle (1) equipped with a trim (2) according to any one of the preceding claims, said trim (2) being adapted to cover the web (11) of the wheel (1), the web (11) of the wheel (1) comprising a series of regularly distributed openings (12), the first blades (23) and the second blades (24) being positioned facing said openings (12) of the web (11) of the wheel (1).

6. Assembly according to claim 5, **characterized in that** each opening (12) of the web (11) of the wheel (1) corresponds to a first blade (23) or to a second blade (24).

7. Assembly according to claim 5 or 6, **characterized in that** the wheel (1) and the trim (2) comprise foolproof means adapted to position each blade (23, 24) of the trim (2) in front of an opening (12) of the web (11) of the wheel (1).

8. Vehicle, in particular a motor vehicle, **characterized in that** it comprises at least one assembly consisting of a wheel (1) equipped with a trim (2) according to any one of claims 5 to 7.
